# EUROPÄISCHE PATENTSCHRIFT

(11) **EP 0 353 548 B1**
(45) Veröffentlichungstag und Bekanntmachung des Hinweises auf die Patenterteilung: **29.09.1993**
(21) Anmeldenummer: 89113293.8
(22) Anmeldetag: 20.07.1989
(51) Int. Cl.: C03B 23/213, C03B 29/06

(54) **Verfahren und Vorrichtung zum Herstellen von Hohlgläsern aus einem Hohlglasteil und mindestens einem Massivglasteil**
Method and apparatus for manufacturing hollow glassware from a hollow glass part and at least one solid glass part
Procédé et dispositif de fabrication de verres creux composés d'une partie creuse et au moins d'une partie massive

(30) Priorität: 29.07.1988 DE 3825852; 13.10.1988 DE 3834908; 27.05.1989 DE 3917332
(43) Veröffentlichungstag der Anmeldung: 07.02.1990
(73) Patentinhaber: BETEILIGUNGEN SORG GMBH & CO. KG, D-97816 Lohr am Main (DE)
(72) Erfinder: Wohlrab, Günther, D-8356 Spiegelau (DE)
(74) Vertreter: Zapfe, Hans, Dipl.-Ing.

(56) Entgegenhaltungen:
- AT-B- 46 528
- DE-B- 2 237 786
- DE-C- 865 643
- DE-C- 1 128 608
- FR-A- 1 119 739
- GB-A- 2 097 779
- US-A- 2 157 985

## Beschreibung

Die Erfindung betrifft ein Verfahren zum Herstellen von Hohlgläsern nach dem Oberbegriff des Patentanspruchs 1 und eine Vorrichtung zur Verwendung bei der Durchführung des Verfahrens nach dem Oberbegriff des Patentanspruchs 13.

Ein derartiges Verfahren ist, was die Herstellung des Hohlglasteils betrifft, sowohl in handwerklichem Maßstab (durch Mundblasen) als auch in industriellem, großtechnischem Maßstab (durch Blasmaschinen) bekannt.

Beim Mundblasverfahren ist zwar eine große Variationsbreite im Design möglich, jedoch sind die Produktionskosten sehr hoch. Dabei wird eine entsprechende Glasportion aus diskontinuierlich betriebenen Hafenöfen entnommen, die etwa 400 kg Glas enthalten, aus dem etwa 600 Weingläser, bestehend aus Kelch, Stiel und Fuß, gefertigt werden können. Ein Stiel wird entweder aus einer Materialanhäufung am Oberteil, einem sog. "Zapfen" herausgezogen, worauf nachfolgend der Fuß angesetzt wird, oder es wird ein vorgefertigter Stiel mit Fuß an das Oberteil angesetzt. Auch Stiel und Fuß werden dabei manuell gefertigt.

Bei der gleichfalls bekannten maschinellen Fertigung im großtechnischem Maßstab müssen die Betriebsparameter zweier Maschinen, die in der Regel als Rundtischmaschinen ausgeführt sind, sorgfältig aufeinander abgestimmt werden. Die Hohlglasteile (Oberteile) werden dabei in einer Blasmaschine oder Presse gefertigt, während die Massivglasteile (Stiel und/oder Fuß) mittels einer Pressmaschine hergestellt wer den. Zum Zeitpunkt der Vereinigung von Hohlglasteil und Massivglasteil befinden sich beide auf Temperaturen oberhalb des sogenannten Erweichungspunktes.

Die gesamte Anpassung dauert etwa einen vollen Tag und führt zu einem außerordentlich hohen Ausschuß, wobei von der Überlegung auszugehen ist, daß eine mit voller Kapazität laufende Maschinenanordnung im 3-Schichten-Betrieb etwa 20.000 Gläser pro Tag produziert. Eine wirtschaftliche Fertigung ist aber erst bei einer Anstellzeit von vier Tagen zu erwarten, so daß sich ein Ausstoß von 80 000 Gläsern ergibt. Bei der Wirtschaftlichkeitsberechnung spielen insbesondere auch die sehr hohen Werkzeugkosten eine ausschlaggebende Rolle. Derartige Großserien lassen sich aber nicht im vollem Umfange und/oder nur über einen sehr langen Zeitraum verkaufen.

Durch die DE-PS 865 643 und die DE-AS 1 128 608 sind auch bereits Verfahren der eingangs beschriebenen Gattung bekannt, bei denen zur Erhöhung der Typenvielfalt durch Kleinserien maschinell geblasene oder gepreßte und auf Lager genommene Oberteile (Kelche) mit unterschiedlichen, gleichfalls maschinell gepreßten und zwischengelagerten kompletten Unterteilen (Stiele mit Fuß) dadurch vereinigt werden, daß man beide Teile nur an der späteren Verbindungsstelle schmilzt und miteinander vereinigt. Eine handwerkliche Bearbeitung der Unterteile ist dabei nicht möglich. Das Endprodukt sieht jedoch wegen der unvermeidbaren Preßgrate an Stiel und Fuß einem vollständig maschinell gefertigten Hohlglas ähnlich und kann nicht mit einem manuell gefertigten Hohlglas konkurrieren. Außerdem ist die Variationsbreite im Design des Stiels begrenzt, da der Fuß wiederum aus dem gleichen Material wie der Stiel besteht.

Ähnliche Einwendungen gelten auch gegenüber den Gegenständen der DE-PS 805 294 und der FR-PS 1 323 852, bei denen gleichfalls komplette Unterteile an die Kelche angeschweißt werden.

Durch die DE-B-2 237 786 US-A-3 934 997 ist es bekannt, an einem geblasenen Hohlglasteil eine koaxiale zapfenförmige Materialanhäufung vorzusehen, die das Material für Stiel und Fuß enthält und in der gleichen Hitze mittels einer 3-Walzen-Anordnung und eines Fußformgliedes zum fertigen Stielglas verarbeitet wird. Es wird ausdrücklich angegeben, daß die Herstellung von Stiel und Fuß sich ohne Verzögerung an das Blasverfahren anschließen muß, damit die Wärme im Glas gehalten werden kann. Vorhandene Brenner dienen mithin allenfalls dazu, die im Glas gespeicherte Wärme zu halten. Die bekannte Verfahrensweise macht es erforderlich, die Betriebsverfahren der Stiel- und Fußformmaschine und der Blasmaschine exakt aufeinander abzustimmen.

Durch die US-A-2 157 985 ist es bekannt, auf den nach oben gerichteten Stiel eines mund- oder maschinengeblasenen Hohlglasteils einen teigigen Glasposten aufzusetzen und in situ zum Fuß zu formen. Mundgeblasene Hohlglasteile sind jedoch extrem teuer. Beim Einsatz maschinengeblasener Hohlglasteile muß wiederum das Hohlglasteil in der gleichen Hitze weiterverarbeitet werden, da das Ansetzen und Ausformen des Fußes nur dann möglich ist, wenn die Verbindungsstelle des Stiels noch eine ausreichend hohe Temperatur hat. Dies bedingt beim Einsatz von maschinengeblasenen Hohlglasteilen wiederum eine sorgfältige Abstimmung der Betriebsverfahren der Fuß-Formmaschine und der Blasmaschine. Da die Fuß-Formmaschine über keinerlei Heizeinrichtung verfügt, muß die Abstimmung der einzelnen Arbeitstakte beider Maschinen noch genauer erfolgen, als bei dem Verfahren nach dem vorstehend beschriebenen Stand der Technik.

Durch die FR-A-1 119 739 ist es bekannt, an ein mundgeblasenes Hohlglasteil einen Glasposten solchen Volumens anzusetzen, daß daraus Stiel und Fuß geformt werden können, was gleichfalls auf manuellem Wege geschieht. Es handelt sich mithin um vollständig handwerklich gefertigte Gläser, die entsprechend teuer sind. Auch hierbei ist vorgeschrieben, daß die Reihenfolge der einzelnen Verfahrensschritte in der gleichen Hitze erfolgen muß, so daß das Ansetzen bzw. Anformen von Stiel und Fuß unverzüglich im Anschluß an den Blasvorgang durchgeführt werden muß.

Durch die AT-B-46 528 ist es bekannt, an ein geblasenes Hohlglasteil einen Glasposten anzusetzen bzw. anzulegen, dessen Volumen demjenigen von Stiel und Fuß entspricht, den angesetzten Glasposten durch Schwerkraft eine langgestreckte Form annehmen zu lassen und den solchermaßen durch Schwerkraft vorgeformten Fuß in einer Presse in die endgültige Form zu bringen. Sämtliche Arbeitsgänge werden dabei manuell und in der gleichen Hitze ausgeführt. Durch die Verwendung einer axial zweigeteilten Klappform entsteht hierbei jedoch wiederum an Stiel und Fuß ein Preßgrat, so daß das Endprodukt trotz seiner handwerklichen und damit teuren Fertigungsweise das Aussehen billigen Maschinenglases hat.

Durch die GB-A-2 097 779 ist es bekannt, das Schliffmuster von Hohlgläsern durch Feuerpolieren zu glätten. Dabei wird durch einen gebündelten Energiestrahl jeweils immer nur eine Teiloberfläche behandelt. Diese Druckschrift befaßt sich nicht mit der Vereinigung maschineller Fertigungstechniken für das Hohlglasteil und handwerklicher Fertigungstechniken für das Massivglasteil.

Der Erfindung liegt daher die Aufgabe zugrunde, ein Herstellverfahren der eingangs beschriebenen Gattung anzugeben, mit dem Hohlgläser, sog. "Tischware", mit großer Variationsbreite und in handwerklicher Qualität, d.h. ohne Preßgrate, und hinsichtlich des Designs auch in kleinen Serien bzw. Losgrößen wirtschaftlich und bei stark veringertem Ausschuß hergestellt werden können.

Die Lösung der gestellten Aufgabe erfolgt durch das Verfahren gemäß Patentanspruch 1 und durch die Vorrichtung gemäß Patentanspruch 13.

Von dem angegebenen Stand der Technik unterscheidet sich der Erfindungsgegenstand ganz wesentlich durch die vollständige Entkopplung des maschinellen Blasvorgangs und des manuellen bzw. handwerklichen Herstellverfahrens von Stiel und/oder Fuß.

Der Ausdruck "zum Stiel formen" bedeutet dabei sowohl das manuelle Formen aus dem Material des Hohlglasteils heraus, z.B. durch Ausziehen eines "Zapfens", als auch das vorherige Ansetzen einer vollständig plastisch verformbaren Glasportion an das Hohlglasteil und die nachträgliche teilweise oder vollständige manuelle Formgebung dieser Glasportion zu einem Stiel. Der Fuß wird in jedem Falle gesondert als plastische Glasportion angesetzt, und anschließend gleichfalls manuell geformt, und zwar dann, wenn der Stiel hierfür durch Abkühlen eine ausreichende mechanische Festigkeit aufweist.

Eine solche Verfahrensmaßnahme steht in völliger Abkehr auch von dem Stande der Technik, bei dem maschinell gefertigte Massivglasteile mit maschinell geblasenen Hohlglasteilen verbunden werden.

Der plastische Zustand des Glases wird durch seinen Erweichungspunkt definiert. Dieser Erweichungspunkt, auch "Softing Point" oder "Littletonpunkt" genannt, entspricht einem Logarithmus 1g = 7,6. Der Littletonpunkt wird gemäß einer Vorschrift dadurch ermittelt, daß ein Glasfaden von 235 mm Länge und von 0,5 bis 0,75 mm Durchmesser sekrecht in einem speziellen Ofen aufgehängt wird, dessen oberer Teil auf einer Länge von 100 mm elektrisch beheizt wird. Die Aufheizgeschwindigkeit liegt zwischen 5 und 10 Grad pro Minute. Als Erweichungspunkt gilt die Temperatur, bei der sich der Faden unter seinem eigenen Gewicht um 1 mm in einer Minute verlängert.

Das erfindungsgemäße Verfahren kann in mindestens drei Varianten durchgeführt werden:
Die erste genannte Variante besteht darin, daß man bei der Herstellung des Hohlglasteils in dessen Achsbereich eine zapfenförmige, in Achsrichtung abstehende Materialanhäufung vorsieht, deren Volumen im wesentlichen dem Stielvolumen entspricht, diese Materialanhäufung zunächst auf eine Ausziehtemperatur aufheizt, die oberhalb des Erweichungspunktes liegt, die Materialanhäufung zu einem Stiel auszieht und an dessen freiem Ende den Fuß anformt.

Die zweite zweite Variante besteht darin, daß man an das Hohlglasteil in dessen in den plastischen Zustand aufgeheizten Achsbereich zunächst das Material für die Ausbildung des Stiels in vollständig plastischem Zustand ansetzt, dieses Material zu einem Stiel formt und an dessen freien Ende den Fuß anformt.

Die dritte angegebene Variante besteht darin, daß man an das Hohlglasteil in dessen in den plastischen Zustand aufgeheizten Achsbereich den Stiel mittels einer Preßglasform in vollständig plastischem Zustand in im wesentlichen seiner endgültigen Form anpreßt und an dessen freiem Ende den Fuß anformt.

Das erfindungsgemäße Verfahren eignet sich in ganz besonderer Weise für sogenanntes Bleikristallglas, Kristallglas und für Kalk-Natronglas. Für derartige Gläser werden beispielhaft folgende Littletonpunkte genannt:

| Glassorte | Littletonpunkt |
|---|---|
| Bleikristallglas mit 24 % Blei | 620°C |
| Kristallglas mit 6 % Blei | 670°C |
| Kalk-Natronglas | 715°C. |

Auf Werte unterhalb dieser beispielhaft genannten Temperaturen müssen die genannten Hohlglasteile abgekühlt werden, bevor sie mittels des erfindungsgemäßen Verfahrens weiterverarbeitet werden. Für andere Glassorten gelten spezifische Temperaturen, die jedoch durch das beschriebene und bekannte Prüfverfahren bestimmt oder aus Tabellen ermittelt werden können.

In besonders vorteilhafter Weise werden dabei die geblasenen Hohlglasteile nach dem vollständigen Unterschreiten des Erweichungspunktes aus dem Arbeitsring der Blasmaschine entnommen und zwischengelagert, d. h. sie werden sogar auf Raumtemperatur abgekühlt. Zum Zwecke der Weiterverarbeitung werden die abgekühlten Hohlglasteile in die erste Halterung eingesetzt, und nach örtlich begrenztem Aufheizen gemäß der Lehre der Erfindung werden die Massivglasteile angeformt bzw. angesetzt.

Weitere Einzelheiten der Verfahrensschritte für das Anformen bzw. Ansetzen des Stiels und des Fußes werden anhand der Detailbeschreibung noch näher erläutert werden. Von ganz wesentlicher Bedeutung ist hierbei, daß der ursprünglich im Arbeitsring der Blasmaschine befindliche Rand des Hohlglasteils bis zur Beendigung der Weiterverarbeitung nicht abgesprengt wird.

Die am fertigen Endprodukt vorhandenen Hohlglasteile unterscheiden sich nicht von dem Ergebnis handwerklicher Arbeit, d. h. von mundgeblasenen Teilen. Sie können jedoch in sehr viel größerer Stückzahl industriell hergestellt und für die Weiterverarbeitung zu kleinen Losgrößen unterschiedlicher Endprodukte vorrätig gehalten werden. Die Weiterverarbeitung erfolgt aber gleichfalls im wesentlichen in handwerklicher Weise, so daß sich das gesamte Endprodukt nicht von dem Ergebnis handwerklicher Arbeit unterscheidet. Mit anderen Worten: Es werden ein maschinelles und ein handwerkliches Fertigungsverfahren miteinander vereinigt.

Das Wesen der Erfindung besteht also im Prinzip darin, maschinell geblasene Hohlglasteile (Oberteile), deren Qualität mundgeblasenen Teilen entspricht, mit handwerklich gefertigten Stielen und Füßen zu versehen. Dadurch entsteht hinsichtlich der Produktpalette eine außerordentlich große Flexibilität, ohne daß die Produkte die Preise von vollständig handwerklich gefertigten Hohlgläsern erreichen. Trotzdem sind die erfindungsgemäß hergestellten Hohlgläser von handwerklich erzeugten Hohlgläsern nicht zu unterscheiden. So besitzen z. B. handgefertigte Stiele keinen Pressgrat und Füße keinen Pressrand. Auch bei ungünstiger Kalkulation sind derartige Hohlgläser immer noch wesentlich billiger als vollständig handwerklich gefertigte Hohlgläser gleicher Form bzw. gleichen Designs.

Ein Hafenofen der eingangs beschriebenen Größe kann hierbei für die Versorgung von vier Werkstellen bzw. für die Fertigung von etwa 3.500 Stielen und Füßen dienen, d. h. zur Herstellung von ca. 3.500 fertigen Hohlgläsern. Während bei einer manuellen Fertigung bisher mit einer Ausschußrate von 20 bis 25 % gerechnet werden mußte, entsteht bei Anwendung des erfindungsgemäßen Verfahrens nur eine Ausschußrate von 8 bis 10 % ; der Rest besteht aus Hohlgläsern Erster Wahl. Die Umrüstzeit der Maschinenanordnung wird ebenso drastisch reduziert wie die Summe der Werkzeugkosten. Eine Anpassungszeit zweier Maschinen aneinander ist nicht erforderlich.

Eine wirtschaftliche Fertigung wird mithin bei kleinen und kleinsten Serien erreicht. Die Stiele und Füße können könne dabei in Form und Farbe in der unterschiedlichsten Weise ausgebildet und zusammengesetzt sein.

Von ganz wesentlicher Bedeutung ist es, die Heizleistung im Achsbereich so hoch zu wählen, daß die übrige Masse des Hohlglasteils keine Zeit hat, durch Wärmeleitung und Konvektion auf eine Temperatur aufgeheizt zu werden, bei der das Hohlglasteil seine mechanische Stabilität, insbesondere seine Stabilität an der Einspannstelle in die Halterung verliert. Ein steiler Temperaturgradient ist also einzuhalten. Versuche haben gezeigt, daß der nicht abgesprengte Rand des Hohlglasteils allenfalls handwarm wird, wenn man in besonders vorteilhafter Weise zwischengelagerte Hohlglasteile von Raumtemperatur einsetzt.

Überraschenderweise springt das Hohlglasteil trotzt des hohen Wärmeeintrags an der späteren Verbindungsstelle nicht, und es wird auch eine spannungsarme Verbindung erreicht, indem nämlich die in das nicht erweichte Hohlglasteil fließende Wärme einen ausreichenden Tempervorgang mit sich bringt, der sehr weitgehend zu einem Spannungsausgleich führt.

Es ist dabei besonders vorteilhaft, wenn man die Achse des Hohlglasteils mittels der ersten Halterung in eine im wesentlichen waagrechte Lage bringt und die Verbindungsstelle des Hohlglasteils unter ständigem Drehen um die gemeinsame Achse von Halterung und Hohlglasteil einer Flamme aussetzt.

Eine kontinuierliche oder quasi-kontinuierliche Aufheizung kann gemäß einer Weiterbildung des erfindungsgemäßen Verfahrens dadurch erfolgen, daß man der Drehbewegung um die Achse des Hohlglasteils eine vorzugsweise horizontale Translationsbewegung überlagert und die zu plastifizierende Stelle bis zum Erreichen der dort vorgegebenen Temperatur entweder kontinuierlich durch eine langgestreckte Flammenfront oder quasi-kontinuierlich bzw. schrittweise durch einzelne Flammen hindurch bewegt, die von einer waagrecnten Reihenanordnung entsprechender Brenner erzeugt werden.

Das erfindungsgemäße Verfahren ermöglicht in ganz besonderer Weise die Herstellung von Hohlgläsern mit Ziermustern, die beispielsweise durch Schleifen hergestellt werden. Bei der maschinellen Fertigung der vollständigen Hohlgläser mußten diese Ziermuster am fertigen Glas erzeugt werden, d. h. an einem Glas, das bereits mit Stiel und/oder Fuß versehen war. Sofern der matte Schliff dabei poliert werden sollte, mußte dabei ein Säurepolierverfahren angewandt werden, das aus vielerlei Gründen zu einer starken Umweltbelastung führt.

Im Rahmen einer weiteren Ausgestaltung des erfindungsgemäßen Verfahrens ist es vielmehr mit besonderem Vorteil möglich, daß man das Hohlglasteil vor dem Anformen bzw. Ansetzten des Massivglasteils durch Schleifen mit einem Ziermuster versieht und das Hohlglasteil vor oder gleichzeitig mit dem Anformen bzw. Ansetzen des Massivglasteils in der gleichen Hitze im Bereich des Ziermusters einem Feuer-Poliervorgang aussetzt.

Damit wird nicht nur die Herstellung von Hohlgläsern mit Ziermuster weiter verbilligt, sondern auch der Einsatz von umweltbelastenden Säuren vermieden.

Es ist dabei besonders vorteilhaft, wenn man an der späteren Verbindungsstelle des Hohlglasteils eine Wandstärke von 3 bis 8 mm, vorzugsweise von 4 bis 6 mm vorsieht, die Außenseite der Verbindungsstelle auf eine Temperatur aufheizt, die zwischen 10°C und 100°C oberhalb des für das betreffende Glas geltenden Erweichungspunktes liegt, während man die Temperatur an der tiefsten inneren Stelle des Hohlglasteils auf einem Wert hält, der - als Temperaturdifferenz gesehen - mindestens 50°C, vorzugsweise mindestens 200°C, unter dem besagten Erweichungspunkt liegt, und die Verbindung der Glasteile herstellt.

Beim erfindungsgemäßen Verfahren wird besonders zweckmäßig so verfahren, daß man die Heizleistung pro Oberflächenelement so hoch wählt, daß sich auf der mit der besagten Achse zusammenfallenden Strecke zwischen der tiefsten inneren Stelle und dem am weitesten abstehenden Oberflächenteil des Hohlglasteils ein mittlerer Temperaturgradient von mindestens 120°C/cm, vorzugsweise von mindestens 200°C/cm einstellt.

Um bei der erfindungsgemäßen Verwendung der Vorrichtung nacheinander in mehr oder weniger regelmäßigen Zeitabständen örtlich aufgeheizte Hohlglasteile zur Verfügung zu haben, sind in ganz besonders vorteilhafter Weise mehrere Wellen mit je einer Halterung für ein Hohlglasteil in einer horizontal beweglichen Transporteinrichtung gelagert, mittels welcher die aufzuheizenden Oberflächenbereiche der einzelnen Hohlglasteile unter ständiger Drehung nacheinander durch die Flammen mehrerer, eine Reihenanordnung bildender Gasbrenner hindurchführbar sind. An die Stelle der Reihenanordnung einzelner Gasbrenner kann auch ein Schlitzbrenner mit einer entsprechend lang ausgebildeten Brennerdüse treten. In dem zuerst genannten Fall wird die Transporteinrichtung schrittweise von Flamme zu Flamme bewegt, in dem zuletzt genannten Fall kann eine kontinuierliche Bewegung der Transporteinrichtung erfolgen.

Es ist dabei weiterhin zweckmäßig, daß jeder Welle mindestens ein weiterer Gasbrenner zugeordnet ist, der zum Zwecke des Flammenpolierens auf denjenigen Bereich des Hohlglasteils ausgerichtet ist, in dem sich die Umlaufbahn des Ziermusters befindet.

Weitere vorteilhafte Ausgestaltungen des Erfindungsgegenstandes ergeben sich aus den übrigen Unteransprüchen.

Ausführungsbeispiele des Erfindungsgegenstandes werden nachfolgend anhand der Figuren 1 bis 20 näher erläutert.

Es zeigen:
- Fig. 1: einen Axialschnitt durch ein maschinell geblasenes Hohlglasteil mit Zapfen für das Ausziehen eines Stieles und das Ansetzen eines Fußes,
- Fig. 2: das Hohlglasteil nach Fig. 1 nach dem Ausziehen des Stieles und während des Heranführens des flüssigen Materials (Glaspostens) für die Formung des Fußes,
- Fig. 3: das fertige Glas nach den Figuren 1 und 2,
- Fig. 4: einen Axialschnitt durch ein maschinell geblasenes Hohlglasteil ohne Zapfen für das Ansetzen des flüssigen Materials (Glaspostens) für das Ausziehen eines Stieles und für das Ansetzen bzw. Anformen eines Fußes,
- Fig. 5: das Hohlglasteil nach Fig. 4 unmittelbar vor dem Ansetzen des flüssigen Materials für das Ausziehen eines Stiels,
- Fig. 6 - 8: die weiteren Verfahrensschritte des Stielausziehens, des Heranführens weiteren flüssigen Materials für das Formen eines Fußes und - schließlich - das fertige Glas,
- Fig. 9 und 10: ein Hohlglasteil nach Fig. 4 im Zusammenwirken mit einer Preßglasform für das Anpressen des flüssigen Stielmaterials in einer weitgehend dem fertigen Stiel entsprechenden Form und das aus dieser Verfahrensvariante hervorgegangene Zwischenprodukt ohne Fuß,
- Fig. 11: eine Außenansicht eines Hohlglasteils nach Fig. 1 mit einem geschliffenen Ziermuster.
- Fig. 12: eine Außenansicht eines vollständigen Stielglases mit einem Hohlglasteil nach Fig. 11 nach dem Absprengen des Randes.
- Fig. 13: eine Außenansicht eines Hohlglasteils nach Fig. 4 mit einem geschliffenen Ziermuster.
- Fig. 14: eine Außenansicht analog Fig. 12 mit einem geschliffenen Hohlglasteil nach Fig. 7 nach dem Absprengen des Randes.
- Fig. 15: eine Außenansicht eines Stielglases analog Fig. 14 jedoch ohne Ziermuster.
- Fig. 16: eine Außenansicht einer vollständigen Biertulpe mit einem Hohlglasteil nach Fig. 1 nach dem Absprengen des Randes.
- Fig. 17: einen Axialschnitt durch eine Vorform zum Herstellen einer Glasportion für das Blasen eines Hohlglasteils nach Fig. 1.
- Fig. 18: eine Halterung mit einem eingesetzten Hohlglasteil nach Fig. 4.
- Fig. 19: eine Seitenansicht einer Vorrichtung zum Aufheizen von Hohlglasteilen und
- Fig. 20: eine Frontalansicht der Vorrichtung nach Fig. 19 mit Blick in Richtung des Pfeils X in Fig. 19 mit einer zusätzlichen Einrichtung zum Flammenpolieren.

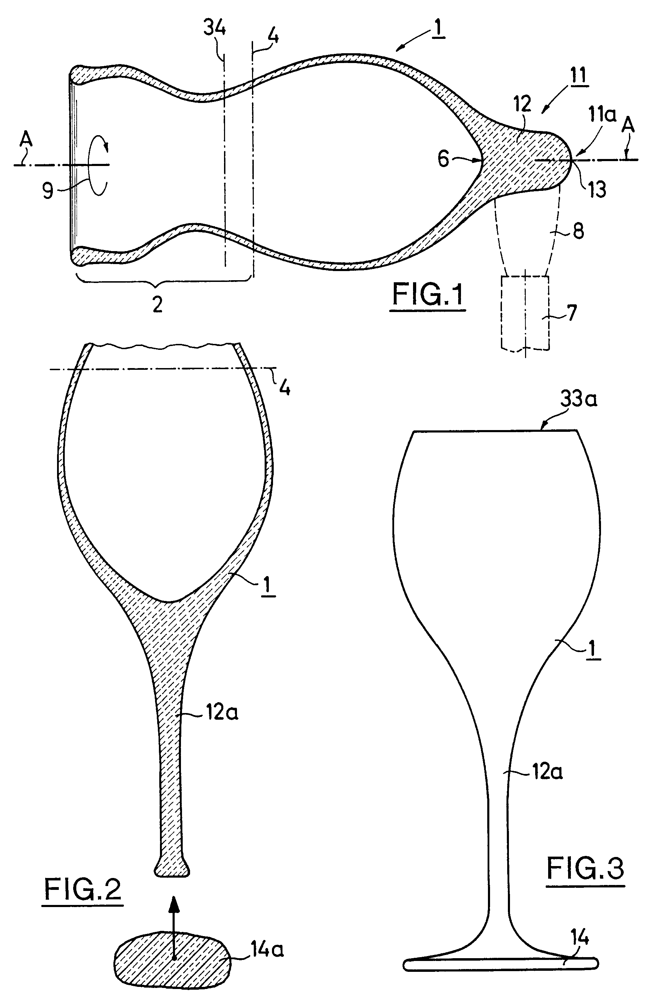

Anhand der Figuren 1 bis 3 wird die erste, oben beschriebene Verfahrensvariante erläutert.

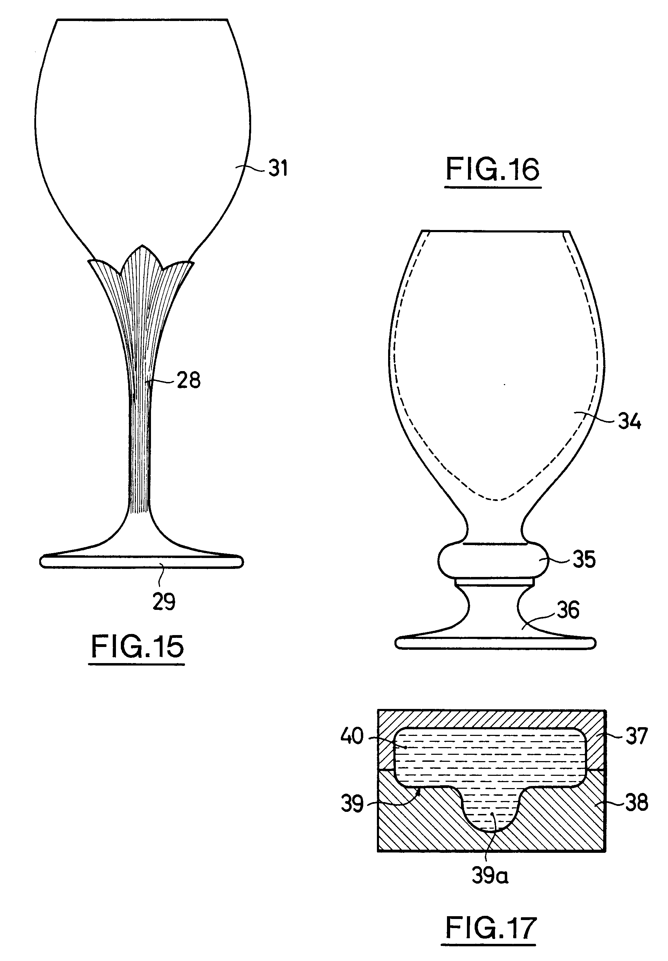

In Fig. 1 ist ein Hohlglasteil 1 gezeigt, das durch einen Blasvorgang in einer nicht gezeigten Blasmaschine aus einer Glasportion gemäß Figur 17 hergestellt wurde. Dabei war der Rand 2 in einen sog. Arbeitsring der Blasmaschine eingespannt. Das Hohlglasteil 1 ist rotationssymmetrisch ausgebildet und besitzt eine Achse A-A, um die es während der Weiterverarbeitung gemäß dem Pfeil 9 gedreht wird. Die strichpunktierte Linie 4 kennzeichnet diejenige Stelle, an der die sogenannte "Kappe", deren äußeres Ende der Rand 2 ist, später, d. h. nach dem Anformen oder Ansetzen des Stiels und/oder eines Fußes abgesprengt wird.

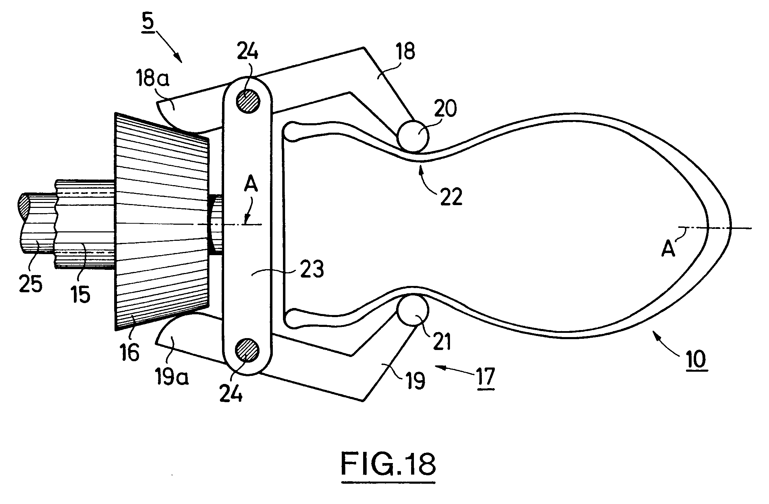

Wie anhand von Fig. 18 noch näher erläutert werden wird, dient der Rand 2 zur Einspannung in eine erste Halterung 5. An der Durchdringungsstelle der Achse A-A durch das Glas besitzt das Hohlglasteil 1 eine tiefste innere Stelle 6, auf die sich einige der nachfolgenden Temperaturangaben beziehen.

In einem Bereich 11 mit einer späteren Verbindungsstelle 11a für das Ansetzen des plastifizierten bzw. flüssigen Materials 14a des Fußes 14 ist eine besonders ausgeprägte Materialanhäufung vorhanden, und zwar wurde bei der Herstellung des Hohlglasteils 1 ein Zapfen 12 angeformt, dessen Volumen im wesentlichen dem Stielvolumen entspricht. Das freie Ende des Zapfens 12 ist halbkugelförmig abgerundet.

Der Zapfen 12 ist hier das Ziel der Aufheizung des Hohlglasteils 1, und seine Außenfläche wird durch den Brenner 7 und die Flamme 8 (beides nur schematisch angedeutet) auf eine Temperatur aufgeheizt, die um mindestens 50°C über dem für das betreffende Glas geltenden Erweichungspunkt liegt. An der tiefsten inneren Stelle 6 wird die Temperatur des Hohlglasteils auf einem Wert gehalten, der - als Temperaturdifferenz gesehen - mindestens 50°C unter dem genannten Erweichungspunkt liegt. Erfahrungsgemäß ist auch hier ein Temperaturgradient von mindestens 120°C/cm auf der Strecke zwischen der tiefsten inneren Stelle 6 und dem äußeren Durchdringungspunkt 13 auf der Achse A-A anzustreben.

Sobald der Zapfen 12 den erforderlichen Plastifizierungsgrad erreicht hat, wird er zu einem Stiel ausgezogen, der schließlich die Form nach Figur 2 hat, und an dessen äußerstes Ende wird das flüssige Material 14a des Fußes 14 angesetzt und in an sich bekannter Weise zu dem Fuß 14 geformt. Fig. 3 zeigt das nunmehr fertige Stielglas.

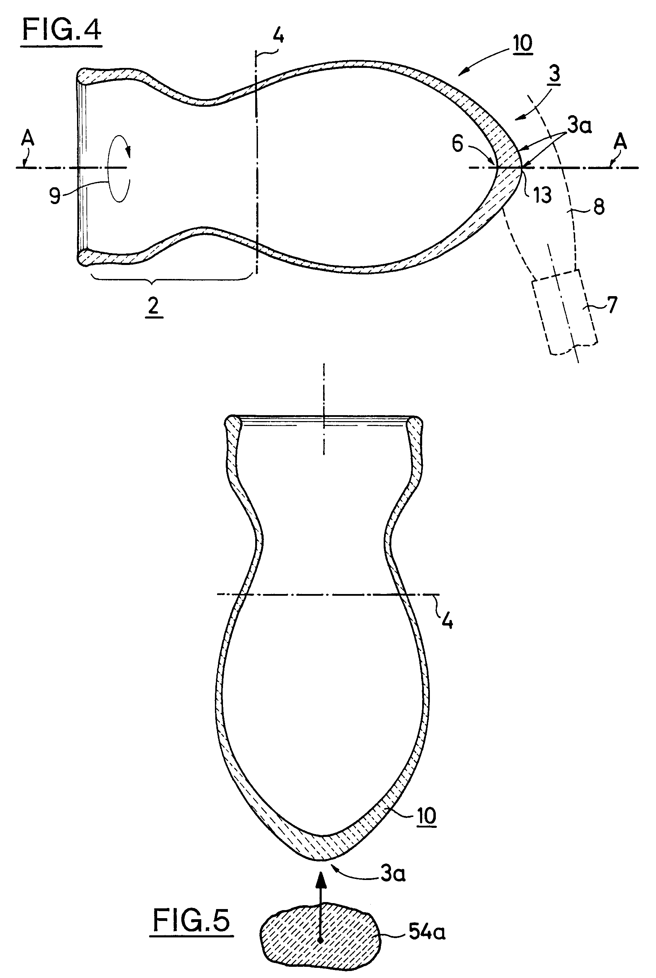

Anhand der Figuren 4 bis 8 wird die zweite, oben beschriebenen Verfahrensvariante erläutert. Dabei können Kelch und Stiel aus unterschiedlichen, insbesondere unterschiedlich gefärbten Glassorten bestehen.

Fig. 4 zeigt gleichfalls einen Brenner 7 mit einer Flamme 8, die auf einen Bereich 3 eines maschinell gefertigten Hohlglasteils 10 ausgerichtet ist. Im Zentrum dieses Bereichs 3 liegt die spätere Verbindungsstelle 3a, die von der Außenseite her auf eine Temperatur aufgeheizt wird, die zwischen 10 und 100°C oberhalb des für das betreffende Glas geltenden Erweichungspunktes liegt. Die Flamme 8 ist dabei in der Weise auf die Verbindungsstelle 3a ausgerichtet, daß die fernere Umgebung der Verbindungsstelle 3a möglichst wenig beheizt wird. An dieser Verbindungsstelle, die die Durchdringungsstelle der Achse A-A durch das Glas umgibt, hat dieses eine deutlich größere Wandstärke und bildet so eine Materialanhäufung, die beim fertigen Glas das sog. "Eis" bildet. An dieser Stelle sollen die Temperaturen - als Temperaturdifferenz gesehen - mindestens 50°C, vorzugsweise mindestens 200°C, unter dem weiter oben angegebenen Erweichungspunkt liegen. Daraus, sowie aus der Wandstärke des Hohlglasteils an der Verbindungsstelle 3a errechnet sich ein mittlerer Temperaturgradient von mindestens 120°C.

Im Bereich des Randes 2 erwärmt sich das Hohlglasteil 1 dadurch nur auf eine Temperatur, die als "handwarm" bezeichnet werden kann. Das Hohlglasteil 1 wird unter Fortsetzung der Beheizung ständig um seine Achse A-A gedreht (Pfeil 9), bis die Verbindungsstelle 3a auf die angegebene Temperatur aufgeheizt ist, bei der die Oberfläche des Glases einen schmelzflüssigen bzw. klebrigen Zustand hat.

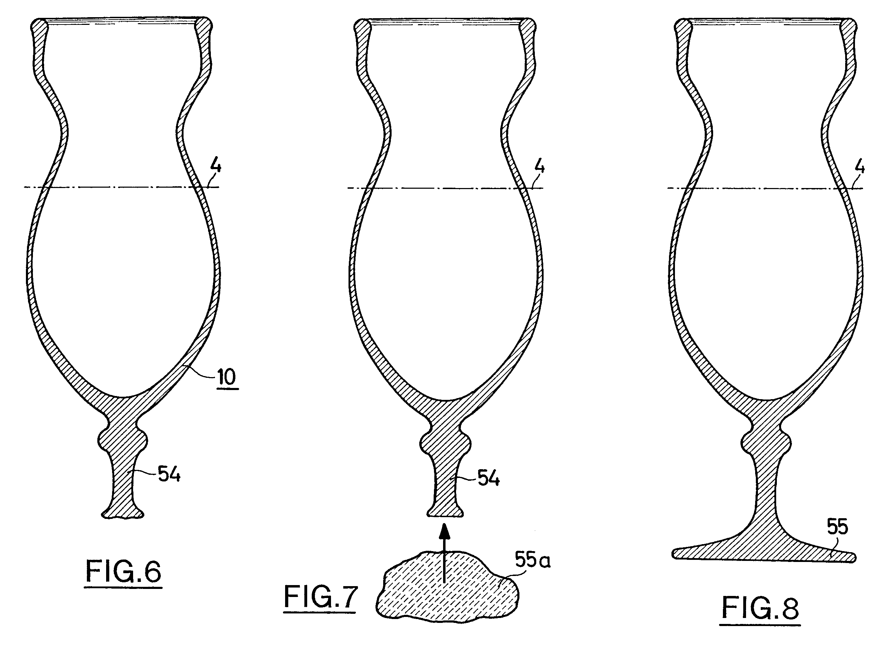

Sobald dieser Zustand erreicht ist, wird das vollkommen flüssige, tropfenförmige Material 54a (Glasposten), dessen Volumen demjenigen des fertigen Stiels 54 entspricht, herangeführt (Fig. 5), mit der klebrigen Verbindungsstelle 3a verbunden und und unmittelbar nachfolgend manuell zu einem Stiel ausgezogen (Fig. 6). Nachdem dieser Stiel eine hinreichende Festigkeit erreicht hat, wird das Material 55a für den Fuß 55 in gleichfalls vollständig plastifizierter d.h. flüssiger Form herangeführt (Fig. 7), mit dem Stiel 54 verbunden und manuell zum Fuß 55 geformt. Figur 8 zeigt das nunmehr fertige Stielglas.

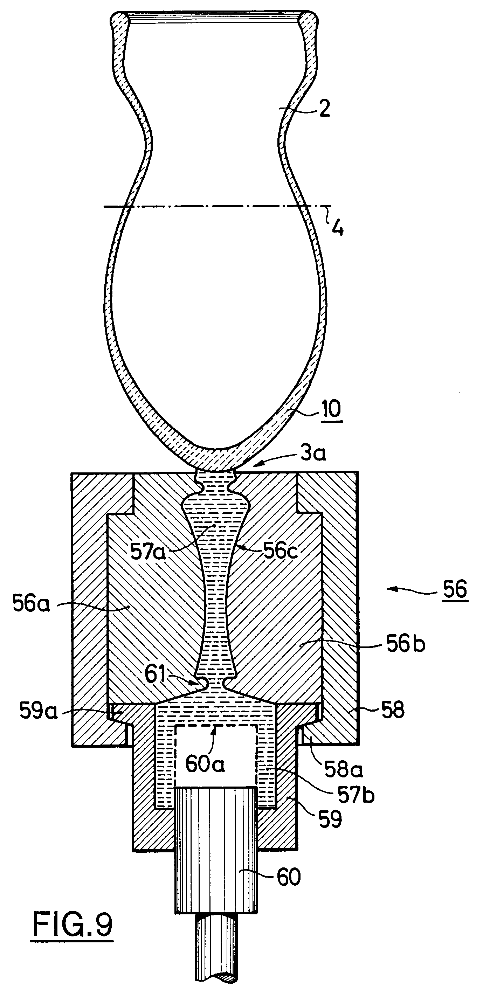

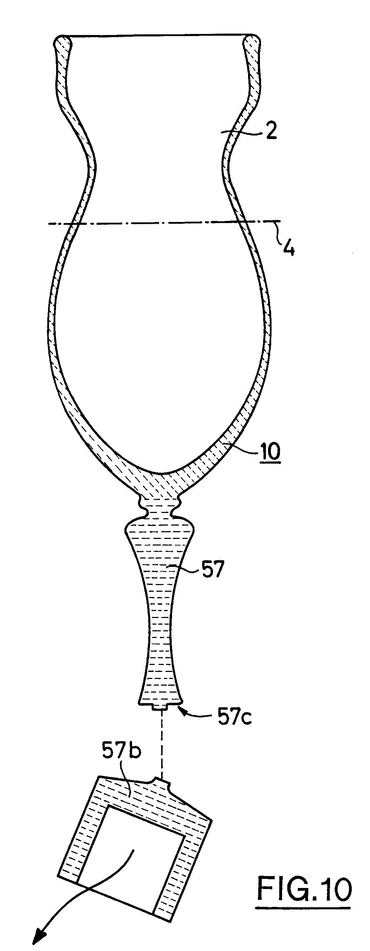

Anhand der Figuren 9 und 10 wird in Verbindung mit den Figuren 7 und 8 die dritte, oben beschriebene Verfahrensvariante erläutert.

Figur 9 zeigt ein Hohlglasteil 10 nach Figur 4 mit gleichfalls "klebriger" Verbindungsstelle 3a. Dieses Hohlglasteil 10 ist auf eine Preßglasform 56 aufgesetzt, die zwei spiegelsymmetrische Formhälften 56a und 56b besitzt, die einen im Zentrum gebildeten rotationssymmetrischen Hohlraum 56c umschließen, der der Form eines Stieles 57 hat (Fig. 10). Der Hohlraum 56c ist oben offen und steht unten mit einem Glas-Preßzylinder 59 in Verbindung.

Die Formhälften 56a und 56b befinden sich in einem gleichfalls zweiteiligen Formenhalter 58, der sich mit einem kegeligen unteren Flanschrand 58a um einen komplementären Flanschrand 59a des Preßzylinders 59 schließen läßt. Zunächst befindet sich das geschmolzene Material 57a für die Bildung des Stiels 57 im Preßzylinder. Die Materialtemperatur wird dabei so gewählt, das das Glas die Viskosität von Bienenhonig hat. Temperaturen um die 1200°C (1100 bis 1300°C) sind für zahlreiche Glassorten brauchbar. Mittels eines Kolbens 60, der am Ende seines Hubes die gestrichelte Stellung 60a einnimmt, wird ein entsprechender Teil des Materials 57a in den Hohlraum 56c und gegen die klebrige Verbindungssstelle 3a des Hohlglasteils 10 gepreßt, so daß sich das Stielmaterial mit dem Hohlglasteil verbindet.

Nach ausreichendem Abkühlen wird der Kolben zurückgezogen, die Form geöffnet, und das nunmehr mit dem Stiel 57 versehene Glas entnommen. Durch eine Einschnürung 61 des Hohlraums 56c wird zwischen dem Stiel 57 und dem im Preßzylinder verbliebenen Materialrest 57b eine Schwachstelle erzeugt, an der der Materialrest 57b abgesprengt wird, wenn das Glas eine Temperatur von 300 bis 350 °C unterschritten hat (Fig. 10).

An das untere freie Ende 57c des Stiels 57 wird nunmehr in Analogie zu dem Verfahren nach den Figuren 7 und 8 das Material 55a für den Fuß manuell angesetzt (Fig. 7) und zum Fuß 55 geformt (Fig. 8). Durch die manuelle Bearbeitung besitzt der Stiel 57 keinen Preßgrat.

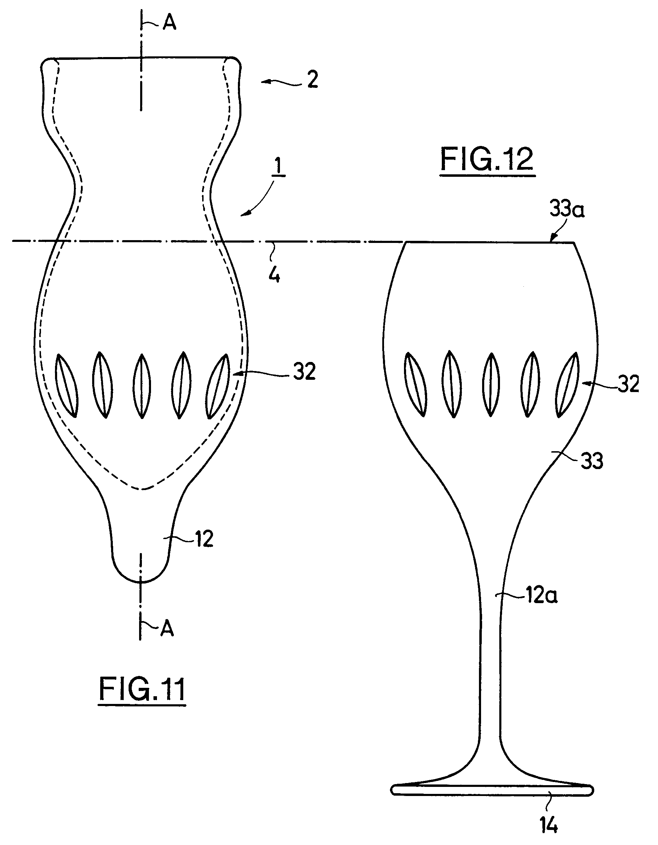

Fig. 11 zeigt eine Außenansicht bzw. Seitenansicht eines Hohlglasteils nach Fig. 1 mit einem einfach gestalteten Ziermuster 32, das durch Schleifen am Hohlglasteil 1 hergestellt worden ist. Bei diesem Ausführungsbeispiel besitzt das Hohlglasteil 1 an seinem geschlossenen Ende bekanntlich den Zapfen 12, der durch Erwärmung auf die in Verbindung mit Fig. 2 beschriebene Weise zu einem Stiel 12a ausgezogen und nachfolgend mit dem Material 14a des Fußes 14 verbunden und in herkömmlicher Weise zum Fuß 14 geformt wird. Dabei wurde ein Kelch 33 durch Absprengen entlang der Linie 4 (Fig. 1 und 2) gebildet, und der obere Rand 33a wurde gleichfalls in herkömmlicher Weise geglättet.

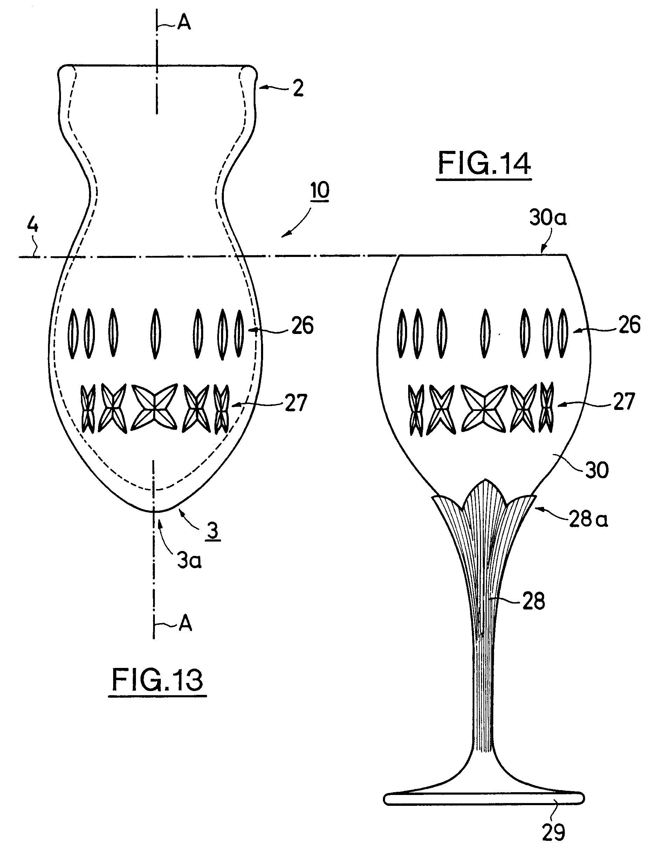

Fig. 13 zeigt eine Außen- bzw. Seitenansicht eines Hohlglasteils 10 nach Fig. 4, dessen Außenseite jedoch durch Schleifen mit auf dem Umfang umlaufenden Ziermustern 26 und 27 versehen worden ist, und zwar vor dem Ansetzen bzw. Anformen des Stiels 28 und des Fußes 29 gemäß Fig. 5. Stiel 28 und Fuß 29 bestehen in diesem Fall aus einem farblich unterschiedlichen Glas, dessen oberer Rand 28a tulpenförmig aufgeweitet und blattförmig geformt ist. In diesen oberen Rand 28 ist das Hohlglasteil 10 gemäß Fig. 4 eingesetzt. Nach dem Absprengen entlang der Linie 4 (Fig. 1) ist aus dem Hohlglasteil 1 ein Kelch 30 entstanden, dessen oberer Rand 30a durch eines der üblichen Verfahren geglättet worden ist. Das fertige Glas ist in Figur 14 gezeigt.

Fig. 15 zeigt eine Außen- bzw. Seitenansicht eines Stielglases analog Fig. 14, bei dem der Kelch 31 kein Ziermuster aufweist. Bereits dieser Vergleich zeigt, welche Variationsbreite im Design mit dem erfindungsgemäßen Verfahren möglich ist.

Fig. 16 zeigt eine Außenansicht bzw. Seitenansicht einer sog. "Biertulpe" mit einem Hohlglasteil nach Fig. 1 nach dem Absprengen des Randes 2. In diesem Falle liegt die Absprengstelle im Bereich der Linie 34 (Fig. 12). Der ursprünglich vorhande Zapfen wurde hierbei nicht zu einem schlanken Stiel ausgezogen, sondern gestaucht, bevor das flüssige Material des Fußes angesetzt und der Fuß 36 geformt wurde. Die Tulpe 34, geht nach unten hin zunächst in eine dadurch gebildete Verdickung 35 und schließlich in den Fuß 36 über.

Fig. 17 zeigt ein Vorrichtungsteil zum Herstellen einer Glasportion für das Blasen eines Hohlglasteils 1 nach Fig. 1. Die Vorrichtung besteht aus einem oberen Teil 37, einer sog. Vorform, und einem unteren Teil 38, einem sog. Preßstempel. Beide schließen einen gemeinsamen, rotationssymmetrischen Hohlraum 39 für die Aufnahme einer Glasportion 40 ein. Der Hohlraum 39 besitzt einen sich nach unten erstreckenden axialen Fortsatz 39a, der die Materialanhäufung für die Bildung des Zapfens 12 aufnimmt. Es ist zu betonen, daß derartige Preßstempel mit dem Fortsatz 39a in Verbindung mit Blasmaschinen unüblich sind, da man bei maschinengeblasenen Hohlgläsern kein Ausziehen eines Stieles vornimmt.

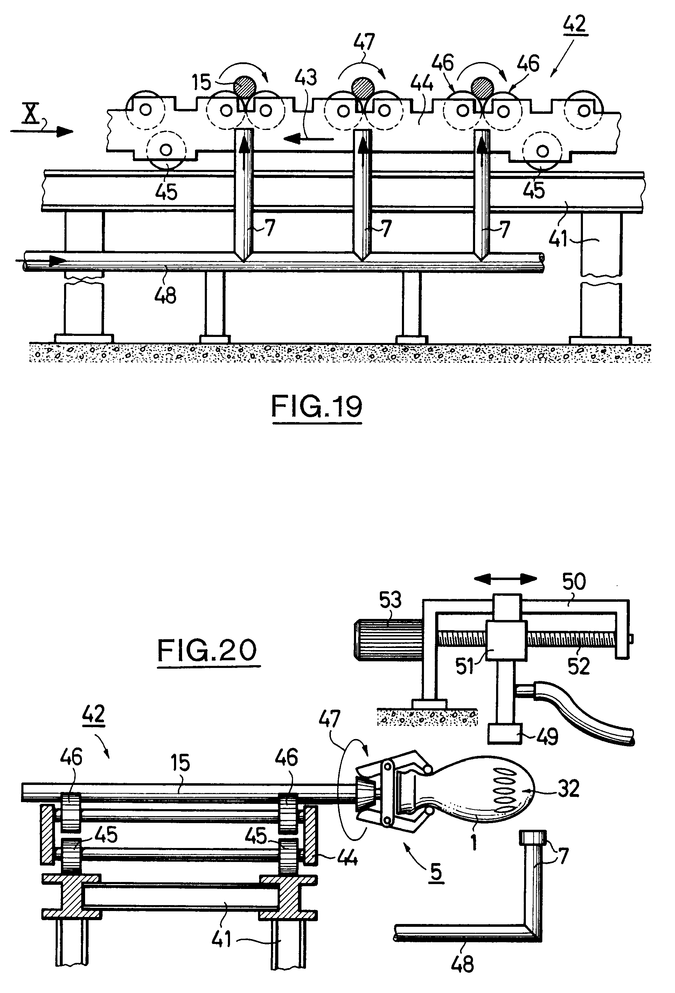

In Fig. 18 ist eine Halterung 5 für ein Hohlglasteil 10 nach Fig. 4 dargestellt, die aber natürlich auch für ein Hohlglasteil 1 nach Fig. 1 eingesetzt werden kann. Die Halterung 5 weist eine hohle Welle 15 auf, die koaxial zur Achse A-A verläuft und an ihrem einen Ende einen Spreizkörper 16 trägt, der mit einer Klemmzange 17 zusammenwirkt. Diese besitzt Zangenhebel 18 und 19 mit Klemmbacken 20 und 21, die das Hohlglasteil 10 im Bereich seiner "Wespentaille" 22 aufnehmen. Die Zangenhebel 18 und 19 sind in einem Kopfteil 23 mittels Gelenkzapfen 24 gelagert. Das Kopfteil 23 ist am Ende einer Zugstange 25 befestigt, die koaxial in der Welle 15 verläuft. Durch heranziehen des Kopfteils 23 an den Spreizkörper 16 werden die dem Hohlglasteil 1 abgekehrten Enden 18a und 19a der Zangenhebel 18 und 19 gespreizt, wodurch der Abstand der Klemmbakken 20 und 21 verringert und damit die Klemmkraft erhöht wird. Mittels der Welle 15 kann die erste Halterung 5 mit dem Hohlglasteil 10 (oder analog mit dem Hohlglasteil 1) auf eine Transporteinrichtung aufgelegt werden, die anhand der Fig. 19 und 20 noch näher erläutert werden wird. Es ist dabei von Bedeutung, daß die Achse A-A des Hohlglasteils 1 bzw. 10 durch die Halterung 5 in einer im wesentlichen waagrechten Lage gehalten und um die Achse A-A kontinuierlich gedreht wird.

Fig. 19 zeigt eine Vorrichtung für die Weiterverarbeitung der abgekühlten, maschinengeblasenen Hohlglasteile in Kleinserien. Auf einem Maschinentisch 41 ist eine Transporteinrichtung 42 in Richtung des Pfeils 43 horizontal verfahrbar angeordnet. Die Transportbewegung kann dabei linear oder auf einer kreisförmigen Bahn erfolgen. Infolgedessen kann man die Details der Fig. 19 auch als einen Ausschnitt aus einer Rundtisch-Maschine verstehen. Die Transporteinrichtung 42 besitzt einen Rahmen 44 mit auf dessen Unterseite angeordeneten Fahrrollen 45, die auf dem Maschinentisch 41 abrollen. Auf der Oberseite des Rahmens 44 befinden sich paarweise doppelt angeordnete Tragrollen 46, wobei die Rollen eines Paares einen derart engen Abstand voneinander haben, daß in den Spalt zwischen den Tragrollen 46 die Wellen 15 der Halterungen 5 (in Fig. 3) eingelegt werden können. Durch einen entsprechenden Antrieb der Tragrollen 46 können sämtliche Wellen 15 in Richtung der Pfeile 47 in Umdrehung versetzt werden.

Der Rotationsantrieb der Wellen 15 kann dabei durch besondere Drehantriebe erfolgen. Es ist jedoch bei einem kontinuierlichen Transport der Hohlglasteile durch eine langgestreckte Flammenfront (Schlitzbrenner) vorteilhaft, die Tragrollen 46 in der Weise mit den Fahrrollen 45 zu koppeln, daß die Tragrollen 46 bei der Horizontalbewegung der Transporteinrichtung 42 zwangsläufig eine Rotationsbewegung ausführen, so daß auf einen besonderen Antrieb für die Tragrollen 46 verzichtet werden kann. Bei einer schrittweisen Bewegung des Rahmens 44 ist es jedoch vorzuziehen, den Tragrollen 46 einen eigenen Antrieb zuzuordnen, so daß die Wellen 15 auch dann in Drehung gehalten werden können, wenn sich der Rahmen 44 im Stillstand befindet und die zu beheizenden Bereiche sämtlicher Hohlglasteile 1 bzw. 10 oberhalb jeweils eines Brenners 7 liegen.

Dem Maschinentisch 41 ist eine Batterie von Brennern 7 zugeordnet, die an eine Versorgungsleitung 48 angeschlossen sind. Der Abstand der Brenner 7 entspricht dabei dem Abstand der Wellen 15 untereinander. Bei der dargestellten Anordnung wird der Rahmen 44 abwechselnd schrittweise bewegt und im Stillstand gehalten, während sich die Hohlglasteile 1 bzw. 10 jeweils oberhalb eines Brenners 7 befinden. Auf diese Weise werden die zu beheizenden Stellen der Hohlglasteile schrittweise bzw. stufenförmig bis auf die gewünschte Endtemperatur aufgeheizt. Zum Erreichen der Verarbeitungstemperatur werden an den beiden letzten Stationen Gas-Sauerstoff- oder Wasserstoff-Sauerstoff-Brenner eingesetzt.

Fig. 20 zeigt noch, daß der Bewegungsbahn der Hohlglasteile 1 bzw. 10 ein weiterer Gasbrenner 49 zugeordnet ist, der zum Zwecke des Flammenpolierens jeweils auf denjenigen Teil des Hohlglasteils ausgerichtet ist, in dem sich die Umlaufbahn des Ziermusters 32 um die eigene Achse A-A befindet. Um den Gasbrenner 49 auf unterschiedliche Positionen der Ziermuster 32 einstellen zu können, ist er in Richtung der Achsen A-A der Hohlglasteile verstellbar angeordnet. Zu diesem Zweck ist der Brenner 49 an einer Horizontalführung 50 befestigt, die parallel zu der jeweiligen Welle 15 verläuft. Die entsprechende Linearbewegung erfolgt mittels einer Spindelmutter 51 und einer Spindel 52, die durch einen Motor 53 angetrieben wird.

Die einzelnen Brenner werden gegebenenfalls durch eine besondere, programmierbare Steuereinrichtung zeitabhängig gesteuert und intermitierend betrieben. Diese zeitabhängige Steuerung erfolgt synchronisiert mit der gleichfalls zeit-und/oder temperaturabhängig gesteuerten Bewegung und ggf. der Stillsetzung des Rahmens 44.

## Patentansprüche

1. Verfahren zum Herstellen von Hohlgläsern durch
a) maschinelles Blasen eines eine Achse (A-A) aufweisenden Hohlglasteils (1, 10), insbesondere eines Kelchs (33), das nach der Entnahme aus einem Blasring einer Blasmaschine zwischengelagert und in erkaltetem Zustand in eine erste Halterung (5) eingesetzt wird, worauf das Hohlglasteil (1, 10) an einer in der besagten Achse liegenden Stelle örtlich begrenzt auf eine Temperatur oberhalb des Erweichungspunktes des Glases aufgeheizt und gleichzeitig der in der Halterung (5) befindliche Teil des Glases unterhalb des Erweichungspunktes gehalten wird, und durch
b) Anformen oder Ansetzen eines ein Massivglasteil bildenden Stieles (12a, 28, 54, 57) und eines Fußes (14, 29, 36, 55) an dieser aufgeheizten Stelle,
dadurch gekennzeichnet, daß zunächst
entweder
c1) der Stiel (12a) auf manuelle Weise vollständig aus einer aufgeheizten und oberhalb der Erweichungstemperatur befindlichen plastischen Materialanhäufung (Zapfen 12) des Hohlglasteils (1) geformt wird,
oder
c2) eine dem Stiel (28, 54, 57) entsprechende Glasmasse (Material 54a, 57a) in vollständig plastischem Zustand an das Hohlglasteil (10) angesetzt und zu dem Stiel (28, 54, 57) geformt wird,
d) und daß schließlich an das dem Hohlglasteil (1, 10) abgekehrte freie Ende des zuvor geformten Stieles (12a, 28, 54, 57) das Material (14a, 55a) des Fußes in gleichfalls plastischem Zustand angesetzt und auf manuelle Weise zum Fuß (14, 29, 36, 55) geformt wird.

2. Verfahren nach Anspruch 1, dadurch gekennzeichnet, daß bei der Herstellung des Hohlglasteils (1) in dessen Achsbereich eine zapfenförmige, in Achsrichtung abstehende Materialanhäufung vorgesehen wird, deren Volumen im wesentlichen dem Stielvolumen entspricht, und daß diese Materialanhäufung zu einem Stiel (12a) ausgezogen und an dessen freiem Ende das Material (14a) des Fußes (14) angesetzt und zum Fuß (14) geformt wird.

3. Verfahren nach Anspruch 1, dadurch gekennzeichnet, daß an das Hohlglasteil (10) in dessen in den plastischen Zustand aufgeheiztem Achsbereich der Stiel (57) mittels einer Preßglasform (56) in vollständig plastischem Zustand in im wesentlichen seiner endgültigen Form angepreßt wird und daß an dessen freiem Ende (57c) der Fuß (29, 36, 55) angesetzt und geformt wird.

4. Verfahren nach einem der Ansprüche 1 bis 3, dadurch gekennzeichnet, daß die Achse (A-A) des Hohlglasteils (1, 10) mittels der ersten Halterung (5) in eine im wesentlichen waagrechte Lage gebracht und die zu plastifizierende Stelle des Hohlglasteils (1, 10) unter ständigem Drehen um die gemeinsame Achse (A-A) von Halterung (5) und Hohlglasteil (1, 10) einer Flamme (8) ausgesetzt wird.

5. Verfahren nach Anspruch 4, dadurch gekennzeichnet, daß der Drehbewegung um die Achse (A-A) des Hohlglasteils (1, 10) eine Translationsbewegung überlagert und die zu plastifizierende Stelle bis zum Erreichen der dort vorgegebenen Temperatur durch eine langgestreckte Flammenfront bewegt wird.

6. Verfahren nach Anspruch 3, dadurch gekennzeichnet, daß das geblasene Hohlglasteil (10) auf die Preßglasform (56) einer Preßglasmaschine aufgesetzt und das Material (57a) des Stiels (57) in vollständig plastischem Zustand angepreßt wird.

7. Verfahren nach einem der Ansprüche 1 bis 6, dadurch gekennzeichnet, daß das Hohlglasteil (1, 10) vor dem Anformen bzw. Ansetzen der Massivglasteile durch Schleifen mit einem Ziermuster (26, 27, 32) versehen wird.

8. Verfahren nach Anspruch 7, dadurch gekennzeichnet, daß das Hohlglasteil (1, 10) vor oder gleichzeitig mit dem Anformen bzw. Ansetzen der Massivglasteile in der gleichen Hitze im Bereich des Ziermusters (26, 27, 32) einem Feuer- Poliervorgang ausgesetzt wird.

9. Verfahren nach Anspruch 1, dadurch gekennzeichnet, daß ein Hohlglasteil (1, 10) verwendet wird, dessen Einsatztemperatur zwischen 15 und 100°C, vorzugsweise zwischen 20 und 50°C liegt.

10. Verfahren nach Anspruch 1, dadurch gekennzeichnet, daß bei der Herstellung des Hohlglasteils (10) an dessen späterer Verbindungsstelle eine Wandstärke von 3 bis 8 mm, vorzugsweise von 4 bis 6 mm vorgesehen wird, daß die Außenseite an der Verbindungsstelle, ausgehend vom erkalteten Zustand auf eine Temperatur aufgeheizt wird, die zwischen 10 und 100°C oberhalb des für das betreffende Glas geltenden Erweichungspunktes liegt, während die Temperatur an der tiefsten inneren Stelle (6) des Hohlglasteils auf einem Wert gehalten wird, der - als Temperaturdifferenz gesehen - mindestens 50°C, vorzugsweise mindestens 200 °C, unter dem besagten Erweichungspunkt liegt.

11. Verfahren nach Anspruch 2, dadurch gekennzeichnet, daß die zapfenförmige Materialanhäufung (12) - ausgehend von der tiefsten inneren Stelle (6) des Hohlglasteils (1) - mit einer Länge von 15 bis 40 mm, vorzugsweise von 20 bis 30 mm, und mit einen mittleren Durchmesser von 15 bis 25 mm gewählt wird, wobei das freie Ende halbkugelförmig abgerundet ist, und daß die Außenfläche des Zapfens auf eine Temperatur aufgeheizt wird, die 50 bis 200°C über dem für das betreffende Glas geltenden Erweichungspunkt liegt, während die Temperatur an der tiefsten inneren Stelle (6) des Hohlglasteils auf einem Wert gehalten wird, der - als Temperaturdifferenz gesehen - mindestens 50°C, vorzugsweise mindestens 200°C, unter dem genannten Erweichungspunkt liegt.

12. Verfahren nach Anspruch 1, dadurch gekennzeichnet, daß die Heizleistung pro Oberflächenelement so hoch gewählt wird, daß sich auf der mit der besagten Achse (A-A) zusammenfallenden Strecke zwischen der tiefsten inneren Stelle (6) und dem am weitesten abstehenden Oberflächenteil des Hohlglasteils (1, 10) ein mittlerer Temperaturgradient von mindestens 120°C/cm, vorzugsweise von mindestens 200°C/cm, einstellt.

13. Vorrichtung zur Verwendung bei der Durchführung des Verfahrens nach Anspruch 1 mit einer Halterung (5) für das Einsetzen des Hohlglasteiles (1, 10) und mit einer Heizeinrichtung (7) für die Beheizung des Hohlglasteils (1, 10) , dadurch gekennzeichnet, daß
a) die Halterung (5) für das Hohlglasteil (1, 10) eine Welle (15) aufweist, die zur Achse (A-A) des Hohlglasteils koaxial verläuft und mit einem Drehantrieb verbunden ist,
b) die Welle in der Weise gelagert ist, daß der aufzuheizende Oberflächenbereich des Hohlglasteils rotierend der Heizeinrichtung (7) ausgesetzt ist,
c) die Welle (15) mit der Halterung (5) für das Hohlglasteil (1, 10) horizontal gelagert und von der Lagerung abnehmbar ist, und daß
d) die Heizeinrichtung (7) unterhalb des zu beheizenden Oberflächenbereichs des Hohlglasteils (1, 10) angeordnet ist und aus mindestens einem Gasbrenner (7) besteht, dessen Flammenrichtung im wesentlichen senkrecht zur Drehachse verläuft.

14. Vorrichtung nach Anspruch 13, dadurch gekennzeichnet, daß mehrere Wellen (15) mit je einer Halterung (5) für ein Hohlglasteil (1, 10) in einer horizontal beweglichen Transporteinrichtung (42) gelagert sind, mittels welcher die aufzuheizenden Oberflächenbereiche (3, 11) der einzelnen Hohlglasteile unter ständiger Drehung nacheinander durch die Flammen mehrerer, eine Reihenanordnung bildender Gasbrenner (7) hindurchführbar sind.

15. Vorrichtung nach Anspruch 14, dadurch gekennzeichnet, daß die Transporteinrichtung (42) paarweise angeordnete, angetriebene Tragrollen (46) aufweist, auf denen die Wellen (15) der Halterungen (5) für die Hohlglasteile (1, 10) ablegbar sind.

16. Vorrichtung nach Anspruch 15, dadurch gekennzeichnet, daß die Tragrollen (46) durch die horizontale Bewegung der Transporteinrichtung (42) antreibbar sind.

17. Vorrichtung nach Anspruch 14, dadurch gekennzeichnet, daß die Transporteinrichtung (42) einen linear beweglicher Rahmen (44) aufweist, dessen Bewegungsrichtung parallel zur Reihenanordnung der Gasbrenner (7) verläuft.

18. Vorrichtung nach Anspruch 14, dadurch gekennzeichnet, daß die Transporteinrichtung (42) ein Rundtisch ist, dessen Drehachse konzentrisch zur Reihenanordnung der Brenner (7) verläuft.

19. Vorrichtung nach Anspruch 14 zur Verwendung bei der Durchführung des Verfahrens nach Anspruch 8, dadurch gekennzeichnet, daß jeder Welle (15) mindestens ein weiterer Gasbrenner (49) zugeordnet ist, der zum Zwecke des Flammenpolierens auf denjenigen Bereich des Hohlglasteiles (1, 10) ausgerichtet ist, in dem sich die Umlaufbahn des Ziermusters (26, 27, 32) befindet.

20. Vorrichtung nach den Ansprüchen 14 und 19, dadurch gekennzeichnet, daß der mindestens eine Gasbrenner (49) für das Flammenpolieren der Bewegungsbahn der Hohlglasteile (1, 10) zugeordnet ist.

21. Vorrichtung nach Anspruch 20, dadurch gekennzeichnet, daß der Gasbrenner (49) für das Flammenpolieren in Richtung der Achsen (A-A) der Hohlglasteile (1, 10) verstellbar ist.

## Claims

1. Method for manufacturing hollow glasses by
a) machine-blowing of a hollow glass part (1. 10̸) having an axis (A-A), in particular a cup (33), which after removal from a clamping ring of a blowing machine is temporarily stored and in its cooled state fitted into a first holder (5), whereupon the hollow glass part (1, 10̸) is locally defined in a position in said axis and heated to a temperature above the softening point of the glass, and at the same time the part of the glass placed in the holder (5) is kept below the softening point, and by
b) forming onto this heated spot, or attaching thereto, a stem (12a, 28, 54, 57) which is a solid glass part and a foot (14, 29, 36, 55),
**characterised in that** initially
either
c1) the stem (12a) is in its entirety manually formed of a plastic material agglomeration (stub 12) of the hollow glass part (1), which is heated and kept above the softening temperature,
or
c2) a mass of glass (material 54a, 57a), which corresponds with the stem (28, 54, 57), is attached to the hollow glass part (10̸) in an entirely plastic state and formed into a stem (28, 54, 57).
d) and that finally the material (14a, 55a) of the foot is, also in a plastic state, attached to the free end of a previously formed stem (12a, 28, 54, 57), which end is facing away from the hollow glass part (1, 10̸), and manually formed to a foot (14, 29, 36, 55).

2. Method according to claim 1, **characterised in that** during the manufacture of a hollow glass part (1) a stub-shaped and axially protruding agglomeration of material is provided. the volume of which corresponds substantially with the stem volume, and that this agglomeration of material is drawn to form a stem (12a) and that onto its free end is attached the material (14a) of the foot (14) and formed into a foot (14).

3. Method according to claim 1, **characterised in that** onto the hollow glass part (10̸) and into its axial area which is heated into a plastic state is pressed the stem in a fully plastic state and substantially in its final form by means of a pressed glass mould (56), and that the foot (29, 36, 55) is attached and formed onto its free end (57c).

4. Method according to one of claims 1 to 3, **characterised in that** the axis (A-A) of the hollow glass part (1, 10̸) is substantially horizontally placed by means of a first holder (5), and the spot of the hollow glass part (1, 10̸) which is to be plastified is exposed to a flame (8) whilst being continuously rotated around the common axis (A-A) of the holder (5) and the hollow glass part (1, 10̸).

5. Method according to claim 4, **characterised in that** a translational motion is superposed over the rotary movement around the axis (A-A) of the hollow glass part (1, 10̸), and that the spot to be plastified is moved through an elongated flame front until a specified temperature is achieved thereat.

6. Method according to claim 3, **characterised in that** the blown hollow glass part (10̸) is placed onto the pressed glass mould (56) of a pressed glass machine, and the material (57a) of the stem (57) is pressed thereonto in a fully plastic state.

7. Method according to one of claims 1 to 6, **characterised in that** a decorative pattern (26, 27, 32) is ground into the hollow glass part (1, 10̸) prior to being formed onto the solid glass parts, or being attached thereto.

8. Method according to claim 7, **characterised in that** the hollow glass part (1, 10̸) is subjected to a flame-polishing process at the same heat in the area of the decorative pattern (26, 27, 32) prior to, or simultaneously with, forming or attaching the solid glass parts.

9. Method according to claim 1, **characterised in that** a hollow glass part (1, 10̸) is utilized, the working temperature of which is between 15 and 10̸0̸°C, preferably between 20̸ and 50̸°C.

10. Method according to claim 1, **characterised in that** in the manufacture of the hollow glass part (10̸) a wall thickness of between 3 and 8 mm. preferably between 4 and 6 mm. is provided at its prospective connecting spot, that the outside is heated at the connecting spot, commencing from its cold state, to a temperature of between 10̸ and 10̸0̸°C above the respective softening point of the glass, whilst the temperature at the lowest inner place (6) of the hollow glass part is held at a value which, seen as a temperature difference, is at least 50̸°C, preferably at least 20̸0̸°C, below the mentioned softening point.

11. Method according to claim 2, **characterised in that** the stubby agglomeration of material (12) is chosen, starting with the deepest inner spot (6) of the hollow glass part (1), at a length of between 15 and 40̸ mm, preferably between 20̸ and 30̸ mm. and with a mean diameter of between 15 and 25 mm, in which respect the free end is hemispherically rounded, and that the outside surface of the stub is heated to a temperature of between 50̸ and 20̸0̸°C above the softening point of the respective glass, whilst the temperature at the deepest inner spot (6) of the hollow glass part is kept at a value which, seen as a temperature difference, is at least 50̸°C. preferably at least 20̸0̸°C below the aforementioned softening point.

12. Method according to claim 1, **characterised in that** the heating output per surface element is chosen so high that a mean temperature gradient of at least 120̸°C/cm, preferably at least 20̸0̸°C/cm, is established on the path which coincides with the aforementioned axis (A-A) between the lowest inner spot (6) and the furthest protruding surface element of the hollow glass part (1, 10̸).

13. Device for carrying out the method according to claim 1, comprising a holder (5) for insertion of the hollow glass part (1, 10̸) and a heating device (7) for heating the hollow glass part (1, 10̸), **characterised in that**
a) the holder (5) for the hollow glass part (1, 10̸) comprises a shaft (15) which extends coaxially to the axis (A-A) of the hollow glass part and which is connected to a rotational drive.
b) the shaft is mounted in such a manner that the surface area of the hollow glass part to be heated is rotatingly exposed to the heating device (7):
c) the shaft (15) with holder (5) for the hollow glass part (1, 10̸) is horizontally mounted and removable from the mount, and that
d) the heating device (7) is arranged below the surface area of the hollow glass part (1, 10̸) to be heated, comprising at least one gas burner (7), the flame direction of which extends substantially perpendicularly to the rotational axis.

14. Device according to claim 13, **characterised in that** a plurality of shafts (15) having each one holder (5) for a hollow glass part (1, 10̸) are mounted in a horizontally movable conveyer (42), by means of which the surface areas (3, 11) to be heated of the individual hollow glass parts are passed with continuous rotation one after the other through the flames of a plurality of gas burners (7), which are arranged in a series formation.

15. Device according to claim 14, **characterised in that** the conveyer (42) comprises driven support rollers (46), which are arranged in pairs and on which the shafts (15) of the holders (5) for the hollow glass parts (1, 10̸) are deposited.

16. Device according to claim 15, **characterised in that** the support rollers (46) are driven by the horizontal motion of the conveyer (42).

17. Device according to claim 14, **characterised in that** the conveyer (42) comprises a linearly movable frame (44), which moves parallel with the series arrangement of the gas burners (7).

18. Device according to claim 14, **characterised in that** the conveyer (42) is a circular table, the rotational axis of which extends concentrally to the series arrangement of the burners (7).

19. Device according to claim 14 for carrying out the method according to claim 8, **characterised in that** each shaft (15) is associated with at least one additional gas burner (49), which for the purpose of flame polishing is oriented towards the area of the hollow glass part (1, 10̸) which includes the peripheral path of the decorative pattern (26, 27, 32).

20. Device according to claims 14 and 19**, characterised in that** the at least one gas burner (49) for flame polishing is associated with the movement path of the hollow glass parts (1, 10̸).

21. Device according to claim 20̸, **characterised in that** the gas burner (49) for flame polishing is adjustable in the direction of axes (A-A) of the hollow glass parts (1, 10̸).

## Revendications

1. Procédé de fabrication de verres creux par
a) soufflage mécanique d'une pièce en verte creux (1, 10) qui présente un axe (A-A), en particulier d'un calice (33), qui est stockée temporairement après avoir été retirée de la bague de soufflage d'une machine à souffler et qui est insérée à l'état refroidi dans un premier support (5), après quoi la pièce en verre creux (1,10) est chauffée, en un endroit limité situé sur ledit axe, à une température supérieure au point de ramollissement du verte et, en même temps, la partie du verte située dans le support (5) est maintenue à une température inférieure au point de ramollissement, et par
b) formation à cet endroit chauffé, par formage ou par adjonction, d'une tige constituant une pièce en verte massif (12a, 28, 54, 57) et d'un pied (14, 29, 36, 55),
caractérisé en ce que, tout d'abord,
c1) la tige (12a) est formée manuellement intégralement à partir d'une accumulation de matière plastique (cône 12) de la pièce en verte creux (1) qui est chauffée et qui se trouve à une température supérieure à la température de ramollissement,
ou
c2) une masse de verte (matière 54a, 57a) correspondant à la tige (28, 54, 57) est ajoutée à l'état totalement plastique à la pièce en verte creux (10) et est formée en la tige (28, 54, 57),
d) et en ce que finalement la matière (14a, 55a) du pied est ajoutée elle aussi à l'état plastique à l'extrémité libre et opposée à la pièce en verte creux (1, 10) de la tige (12a, 28, 54, 57) formée auparavant et est formée manuellement en le pied (14, 29, 36, 55).

2. Procédé selon la revendication 1, caractérisé en ce que, lors de la fabrication de la pièce en verte creux (1), il est prévu dans le domaine de son axe une accumulation de matière en forme de cône, éloignée en direction axiale, dont le volume correspond sensiblement au volume de la tige, et en ce que cette accumulation de matière est étirée en une tige (12a), et la matière (14a) du pied (14) est ajoutée à son extrémité libre et formée en le pied (14).

3. Procédé selon la revendication 1, caractérisé en ce que la tige (57) est fixée par pression à l'aide d'un moule pour verte pressé (56) à l'état totalement plastique et sous sa forme sensiblement finale à la pièce en verte creux (10) dans son domaine axial chauffé à l'état plastique, et en ce que le pied (29, 36, 55) est ajouté à l'extrémité libre (57c) de la tige et est formé.

4. Procédé selon l'une des revendications 1 à 3, caractérisé en ce que l'axe (A-A) de la pièce en verte creux (1, 10) est amené dans une position sensiblement horizontale à l'aide du premier support (5) et l'endroit de la pièce en verre creux (1, 10) qui doit être plastifié est exposé à une flamme (8) sous rotation constante autour de l'axe commun (A-A) du support (5) et de la pièce en verre creux (1, 10).

5. Procédé selon la revendication 4, caractérisé en ce qu'un mouvement de translation est combiné au mouvement de rotation autour de l'axe (A-A) de la pièce en verte creux (1, 10) et l'endroit à plastifier est déplacé dans un front de flamme allongé jusqu'à ce qu'il atteigne la température qui y est prédéterminée.

6. Procédé selon la revendication 3, caractérisé en ce que la pièce en verte creux (10) soufflée est montée sur le moule pour verte soufflé (56) d'une machine à souffler et la matière (57a) de la tige (57) est fixée par pression à l'état totalement plastique.

7. Procédé selon l'une des revendications 1 à 6, caractérisé en ce que la pièce en verte creux (1, 10) est munie par meulage d'un motif décoratif (26, 27, 32) avant la formation des pièces en verte massif par formage ou adjonction.

8. Procédé selon la revendication 7, caractérisé en ce que, avant ou pendant la formation des pièces en verte massif par formage ou adjonction, la pièce en verte creux (1, 10) est exposée dans la même chaude à un processus de polissage au feu dans le domaine du motif décoratif (26, 27, 32).

9. Procédé selon la revendication 1, caractérisé en ce que l'on utilise une pièce en verte creux (1, 10) dont la température d'emploi est située entre 15 et 100°C, de préférence entre 20 et 50°C.

10. Procédé selon la revendication 1, caractérisé en ce qu'il est prévu, au cours de la fabrication de la pièce en verte creux (10), une épaisseur de paroi de 3 à 8 mm, de préférence de 4 à 6 mm, au niveau de son point de liaison ultérieur, en ce que le côté externe au niveau de point de liaison est chauffé à partir de l'état froid à une température qui est située entre 10 et 100°C au-dessus du point de ramollissement du verte concerné, tandis que la température au niveau du point interne le plus profond (6) de la pièce en verte creux est maintenue à une valeur qui, considérée comme une différence de température, est située à au moins 50°C, de préférence à au moins 200°C au-dessous dudit point de ramollissement.

11. Procédé selon la revendication 2, caractérisé en ce que l'accumulation de matière (12) en forme de cône, à partir du point interne le plus profond (6) de la pièce en verte creux (1), est choisie avec une longueur de 15 à 40 mm, de préférence de 20 à 30 mm, et avec un diamètre moyen de 15 à 25 mm, l'extrémité libre étant arrondie en forme de demi-sphère, et en ce que la surface externe du cône est chauffée à une température qui est située entre 50 et 200°C au-dessus du point de ramollissement du verte concerné, tandis que la température au niveau du point interne le plus profond (6) de la pièce en verte creux est maintenue à une valeur qui, considérée comme une différence de température, est située à au moins 50°C, de préférence à au moins 200°C au-dessous dudit point de ramollissement.

12. Procédé selon la revendication 1, caractérisé en ce que la puissance de chauffage par élément de surface est choisie de manière qu'il s'établisse dans la zone qui coïncide avec ledit axe (A-A) entre le point interne le plus profond (6) et la partie de la surface de la pièce en verte creux (1, 10) la plus éloignée un gradient moyen de température d'au moins 120°C/cm, de préférence d'au moins 200°C/cm.

13. Dispositif destiné à être utilisé lors de la mise en oeuvre du procédé selon la revendication 1, comportant un support (5) pour le montage de la pièce en verte creux (1, 10) et un dispositif chauffant pour le chauffage de la pièce en verre creux (1, 10), caractérisé en ce que :
a) le support (5) pour la pièce en verte creux (1, 10) présente un arbre (15) qui s'étend coaxialement à l'axe (A-A) de la pièce en verte creux et qui est relié à un dispositif d'entraînement en rotation,
b) l'arbre est logé de telle manière que le domaine de la surface de la pièce en verte creux qui doit être chauffé est exposé en rotation au dispositif chauffant,
c) l'arbre (15) portant le support (5) pour la pièce en verte creux (1, 10) est logé horizontalement et peut être séparé du logement, et en ce que
d) le dispositif chauffant est agencé sous le domaine de la surface de la pièce en verte creux (1, 10) qui doit être chauffé et consiste en au moins un brûleur à gaz (7) dont la direction de la flamme s'étend sensiblement perpendiculairement à l'axe de rotation.

14. Dispositif selon la revendication 13, caractérisé en ce que plusieurs arbres (15) comportant chacun un support (5) pour une pièce en verte creux (1, 10) sont logés dans un dispositif de transport (42) mobile horizontalement, au moyen duquel les domaines (3, 11) de la surface des différentes pièces en verte creux qui doivent être chauffés peuvent être amenés à traverser les uns après les autres, tout en tournant constamment, les flammes de plusieurs brûleurs à gaz (7) formant une rangée.

15. Dispositif selon la revendication 14, caractérisé en ce que le dispositif de transport (42) comporte des galets de support (46) disposés par paires et entraînés, sur lesquels les arbres (15) des supports (5) pour les pièces en verte creux (1, 10) peuvent être déposés.

16. Dispositif selon la revendication 15, caractérisé en ce que les galets de support (46) peuvent être entraînés par le mouvement horizontal du dispositif de transport (42).

17. Dispositif selon la revendication 14, caractérisé en ce que le dispositif de transport (42) comporte un cadre (44) déplaçable linéairement, dont la direction du mouvement s'étend parallèlement à la rangée des brûleurs à gaz (17).

18. Dispositif selon la revendication 14, caractérisé en ce que le dispositif de transport (42) est une table circulaire dont l'axe de rotation s'étend concentriquement à la rangée des brûleurs (7).

19. Dispositif selon la revendication 14, destiné à être utilisé lors de la mise en oeuvre du procédé selon la revendication 8, caractérisé en ce que qu'à chaque arbre (15) est associé au moins un autre brûleur à gaz (49) qui, pour le polissage à la flamme, est dirigé vers le domaine de la pièce en verte creux (1, 10) dans lequel se trouve la trajectoire du motif décoratif (26, 27, 32).

20. Dispositif selon les revendications 14 et 19, caractérisé en ce que le ou les brûleurs à gaz (49) destinés au polissage à la flamme sont associés à la trajectoire des pièces en verte creux (1, 10).

21. Dispositif selon la revendication 20, caractérisé en ce que le brûleur à gaz (49) destiné au polissage à la flamme est déplaçable en direction des axes (A-A) des pièces en verte creux (1, 10).
